# EUROPÄISCHE PATENTSCHRIFT

(11) **EP 3 279 115 B1**
(45) Veröffentlichungstag und Bekanntmachung des Hinweises auf die Patenterteilung: **02.01.2019**
(21) Anmeldenummer: 17001261.1
(22) Anmeldetag: 24.07.2017
(51) Int. Cl.: B65D 83/04, B65D 41/04, B65D 81/26, B29C 49/76, B65D 25/10

(54) **VERFAHREN ZUR HERSTELLUNG EINES BEHÄLTERVERSCHLUSS-SYSTEMS**
METHOD FOR PRODUCING A CONTAINER CLOSURE SYSTEM
PROCÉDÉ DE FABRICATION D'UN SYSTÈME DE FERMETURE DE RÉCIPIENT

(30) Priorität: 05.08.2016 DE 102016009484
(43) Veröffentlichungstag der Anmeldung: 07.02.2018
(73) Patentinhaber: Gaplast Gmbh, 82442 Altenau (DE)
(72) Erfinder: Kneer, Roland, 82490 Farchant (DE); Kneer, Stephan, 82490 Farchant (DE)
(74) Vertreter: Flosdorff, Jürgen

(56) Entgegenhaltungen:
- EP-A2- 0 432 916
- WO-A1-03/011699
- GB-A- 2 267 076
- US-A1- 2004 256 400

## Beschreibung

Die Erfindung betrifft ein Verfahren zur Herstellung eines Behälters mit einer Behälteröffnung zur Verwendung in einem Behälterverschluss-System mit dem Behälter und einer Schraubkappe, die auf den Behälter aufschraubbar ist und an die eine Olive angeformt ist, die an einem ringförmigen Randbereich der Behälteröffnung zur Anlage kommt. Der Behälter hat bevorzugt die Form einer Flasche mit einem Flaschenhals, er kann aber auch eine Röhrchenform mit einem gleichbleibenden Radius haben.

Die Olive hat die Aufgabe, den Behälter vollkommen dicht zu verschließen, weshalb die Olive im aufgeschraubten Zustand der Schraubkappe fest an den Randbereich des Behälters angepresst ist.

Bei den bisher bekannten Systemen der betrachteten Art ist die kreisringförmige Olive an einer solchen Stelle der Schraubkappe angeformt, dass die Olive in die Behälteröffnung eingreift und an dem inneren ringförmigen Randbereich der Behälteröffnung dicht anliegt. Dies ist dann problematisch, wenn die Behälteröffnung des Behälters nach dem Befüllen mit einer Folie, vorzugsweise einer Aluminiumfolie, abgedichtet werden soll, die auf der Oberkante der Behälterwand angeklebt oder angeschweißt wird. Wenn in einem solchen Fall die Schraubkappe bis in ihre Endposition auf den Behälterhalt aufgeschraubt würde, würde die Olive die Dichtfolie durchstoßen. Dieses Problem hat man bisher dadurch gelöst, dass am unteren Randbereich der Schraubkappe ein Abreißring befestigt wird, der das Aufschrauben der Schraubkappe so begrenzt, dass die Olive oberhalb der Dichtfolie bleibt. Wenn der Behälter in Benutzung genommen werden soll, werden die Dichtfolie und der Abreißring entfernt, woraufhin dann die Schraubkappe so auf den Behälterhals aufgeschraubt werden kann, dass die Olive innen am ringförmigen Randbereich der Behälteröffnung anliegt. Dies ist mit einem beträchtlichen Aufwand bei der Herstellung der Schraubkappe und der Handhabung des Behälterverschluss-Systems verbunden.

Die GB 2 267 076 A offenbart ein gattungsgemäßes Verfahren im Zusammenhang mit einem Behälterverschluss-System mit einer Schraubkappe, an der eine Dichtolive an einer solchen Position angeformt ist, dass sie an dem äußeren Randbereich des Behälters dicht anliegt, wobei dieser äußere ringförmige Randbereich eine durchgehend glatte Oberfläche ohne Grate hat. Dies wird in einem zweistufigen Herstellungsverfahren für den Behälter erreicht, dessen gratfreier Randbereich durch Spritzgießen eines ersten Abschnitts des Behälters um einen Blasdorn gebildet wird, während der Rest des Behälters durch Blasformen des zweiten Abschnitts des Behälters erzeugt wird.

Die WO 03/011699 A1 offenbart ein Behälterverschluss-System mit einem Behälter, der eine Olive enthält, die außen an dem ringförmigen Randbereich der Öffnung des Behälters anliegt. Die Druckschrift erwähnt aber nicht, dass dieser Randbereich eine durchgehend glatte Oberfläche ohne Grate hat, weshalb dieses Merkmal in dieser Druckschrift nicht offenbart ist.

Der vorliegenden Erfindung liegt die Aufgabe zugrunde, ein Verfahren zur Herstellung eines Behälterverschluss-Systems anzugeben, bei dem die obigen Nachteile vermieden sind.

Diese Aufgabe wird durch die Merkmale des Patentanspruchs 1 gelöst.

Vorteilhafte Ausgestaltungen der Erfindung sind in den Unteransprüchen gekennzeichnet.

Erfindungsgemäß wird also der Behälter, im Extrusionsblasverfahren oder Spritzblasverfahren derart hergestellt, dass an dem äußeren ringförmigen Randbereich des Behälters keine Formtrennung der Blasformhälften stattfindet, indem ein Blasdorn eines Blaswerkzeugs verwendet wird, der von einem ringförmigen Blasdornteil umgeben ist, das einen ringförmigen Ansatz enthält, der einen Ringspalt zwischen sich und der Außenseite des Blasdorns begrenzt, wobei in diesem Ringspalt der Randbereich der Behälteröffnung ausgebildet wird, der damit sowohl an der Innenseite als auch an der Außenseite glatt durchgehende Oberflächen hat, wobei das Blasformteil außerdem zwei radial äußere Ringschultern enthält, mit denen es an entsprechenden Ringschultern der beiden Blasformhälften in deren geschlossenen Zustand und des Blasdorns anliegt. Da der ringförmige Ansatz über den gesamten Umfang eine glatte Innenwand hat, wird auf diese Weise eine gratfreie Anlagefläche für die äußere Olive ausgebildet.

Diese äußere Olive dichtet den Innenraum des Behälters genauso sicher ab wie eine herkömmliche innere Olive, da sie infolge der durchgehend glatten Oberfläche des äußeren ringförmigen Randbereichs des Behälters über den ganzen Umfang dicht anliegt. Dies wäre bei herkömmlichen, im Extrusionsblasverfahren oder Spritzblasverfahren hergestellten Behältern nicht möglich, da diese am äußeren ringförmigen Randbereich zwei Grate haben, die durch die zu öffnenden und zu schließenden Blasformhälften nach dem Entformen unvermeidlich zurück bleiben.

Mit besonderem Vorteil kann bei dieser Ausbildung die Behälteröffnung durch eine entfernbare Folie versiegelt werden, die mit der Randkante der Behälteröffnung verschweißt oder verklebt wird, da sich die Folie radial innerhalb der äußeren Olive befindet. Bevorzugt ist vorgesehen, dass der Außendurchmesser der Folie dabei etwas kleiner ist als der auf gleicher Höhe befindliche Innendurchmesser der Olive.

Die Montage des Behälterverschluss-Systems ist zudem dadurch vereinfacht, dass die Folie in die Schraubkappe eingelegt werden kann, wobei nach vollständigem Aufschrauben der Schraubkappe die Folie durch die Schraubkappe hindurch vorzugsweise durch Induktionsschweißen auf dem Rand der Behälteröffnung befestigt werden kann.

Nach einem weiteren oder gesonderten Gesichtspunkt der Erfindung wird zudem vorgeschlagen, dass ein Blockierelement mit einer Aufhängeeinrichtung an der Innenwand des Behälterhalses befestigt wird, derart, dass das Blockierelement unterhalb des Behälterhalses angeordnet ist. Das Blockierelement mit der Aufhängeeinrichtung bildet eine Schütthilfe, mit der verhindert wird, dass bei einer Überkopflage des geöffneten Behälters eine große Anzahl fester Inhaltskörper, beispielsweise Kapseln, Dragees oder Tabletten, aus der Behälteröffnung heraus fallen, wobei die überzähligen Stücke wieder in den Behälter zurück befördert werden müssen. Hierbei können z.B. Tabletten beschädigt oder verschmutzt werden, wenn sie versehentlich auf den Boden fallen.

Damit die Schütthilfe die Anzahl der aus dem offenen Behälter heraus fallenden Stücke verringert, ist vorgesehen, dass die Aufhängereinrichtung Durchlaßöffnungen für die Stücke aufweist, wobei die Durchlassöffnungen jeweils kleiner sind als die Durchmesser des Behälterhalses. Die Aufhängereinrichtung enthält vorzugsweise einen Ring, der vorzugsweise über voneinander beabstandete Stege mit dem Blockierelement verbunden ist, wobei die Stege zwischen sich die Durchlassöffnungen begrenzen.

Wenn der Behälter die Form einer Flasche mit einem Flaschenhals hat, ist mit Vorteil vorgesehen, dass das Blockierelement und die Aufhängeeinrichtung, vorzugsweise der Ring mit über den Umfang verteilten Stegen, einen übereinstimmenden Außendurchmesser haben, der im wesentlichen mit dem Innendurchmesser des Flaschenhalses übereinstimmt. Der Ring wird vorzugsweise in eine innere Ringnut des Flaschenhalses eingesetzt, wozu der Ring mithilfe von Schwachstellen radial zusammen drückbar ist und in der Ringnut wieder elastisch in die anfängliche Ringform zurück kehrt.

Das Blockierelement kann eine beliebige Form haben, wobei wesentlich ist, dass die Inhaltsstücke nicht durch das Blockierelement hindurch gehen können. Das Blockierelement kann die Form einer Scheibe haben, die bevorzugt nach oben gewölbt ist oder nach oben kegelförmig zuläuft.

Mit besonderem Vorteil kann vorgesehen sein, dass das Blockierelement als eine Kammer ausgebildet ist, die mit Trockenmittel gefüllt wird.

Die Schütthilfe kann auch in einen röhrchenförmigen Behälter eingesetzt werden, wobei dann das Blockierelement einen kleineren Radius hat als das Röhrchen.

Das Behälterverschluss-System mit der äußeren Olive kann mit und ohne Dichtfolie auf dem Rand der Behälteröffnung sowie mit und ohne die oben beschriebene Schütthilfe ausgebildet sein.

Weitere Einzelheiten der Erfindung ergeben sich aus der nachfolgenden Beschreibung einer bevorzugten Ausführungsform des Behälterverschluss-Systems und eines wesentlichen Teils eines Blaswerkzeugs zur Herstellung des Behälters. Dabei zeigen:

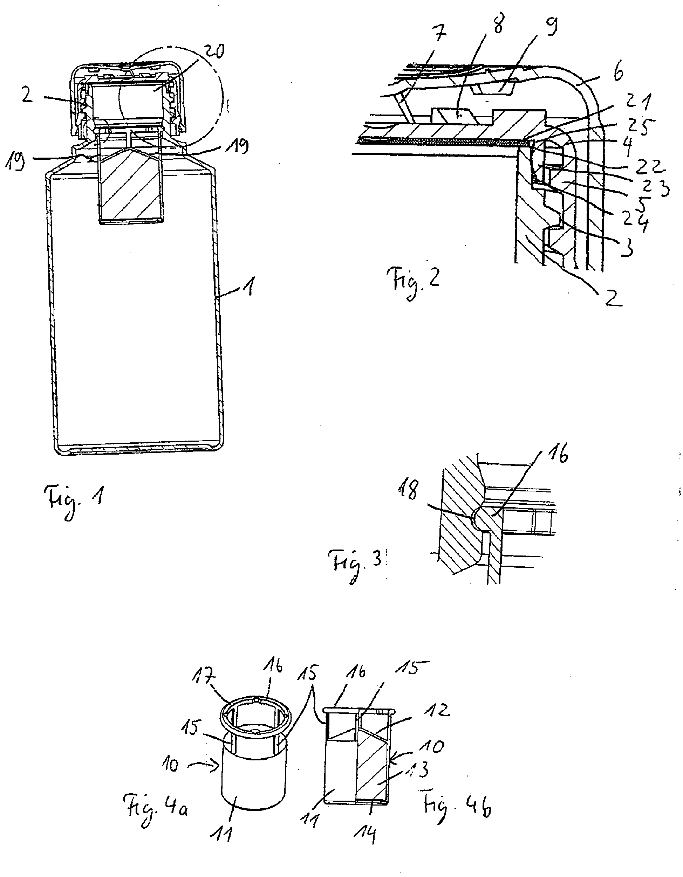

- Figur 1: einen mittigen Längsschnitt durch ein Behälterverschluss-System;
- Figur 2: eine vergrößerte Darstellung des Details B in Figur 1;
- Figur 3: eine vergrößerte Darstellung des Details C in Figur 1;
- Figuren 4a und 4b: eine perspektivische Ansicht einer Schütthilfe sowie eine teilweise geschnittene Seitenansicht der Schütthilfe;
- Figur 5: einen Schnitt durch einen Teil des Blaswerkzeugs;
- Figur 6: eine vergrößerte Darstellung der Einzelheit B in Figur 5.

Ein flaschenförmiger Behälter 1 enthält einen Behälterhals 2 mit einem Außengewinde 3, auf das eine Schraubkappe 4 mit ihrem Innengewinde 5 aufgeschraubt ist. Auf die Schraubkappe 4 ist eine Kindersicherungs-Kappe 6 aufgeschnappt, die in dem dargestellten Zustand frei drehbar auf der Schraubkappe 4 sitzt. Wenn die Kindersicherungs-Kappe 6 gegen die Kraft elastischer Stege 7 niedergedrückt wird, greifen Zähne 8, 9 auf der Schraubkappe 4 und an der Unterseite der Kindersicherungs-Kappe 6 ineinander, so dass die Schraubkappe 4 gedreht werden kann.

Eine Schütthilfe 10 enthält ein Blockierelement 11, das eine obere kegelförmige Abschlusswand 12 enthält und als Kammer ausgebildet ist, die mit Trockenmittel 13 gefüllt ist. Das untere Ende der Kammer ist durch eine Pappscheibe 14 abgedichtet.

Das Blockierelement 11 ist durch vier parallele Stege 15 mit einem Befestigungsring 16 verbunden, wobei die Stege 15 in Umfangsrichtung gleichmäßig voneinander beabstandet sind. Der Ring 16 hat vier ebenfalls gleichmäßig beabstandete radial innere Einbuchtungen 17, die ein radiales Zusammendrücken des Rings 16 ermöglichen.

Der Ring 16 ist in eine innere Ringnut 18 im Flaschenhals 2 eingerastet und hält das Blockierelement 11 unterhalb des Flaschenhalses. Der Flaschenhals 2 und die Stege 15 begrenzen eingeschränkte Durchtrittsöffnungen 19 für einzelne Kapseln.

Die Behälteröffnung 20 ist vor Ingebrauchnahme des Behälterverschluss-Systems durch eine Aluminiumfolie 21 versiegelt, die durch Induktionsschweißen auf der oberen Randkante 22 des Behälterhalses 2 befestigt ist.

An der Unterseite der Schraubkappe 4 ist eine Olive 23 an einer radial äußeren Position angeformt, derart, dass sie an dem äußeren ringförmigen Randbereich 24 mit ihrer radial inneren Ausbuchtung dicht anliegt. Zwischen dem äußeren Rand der Folie 21 und der äußeren Olive 23 verbleibt ein kleiner Ringspalt 25.

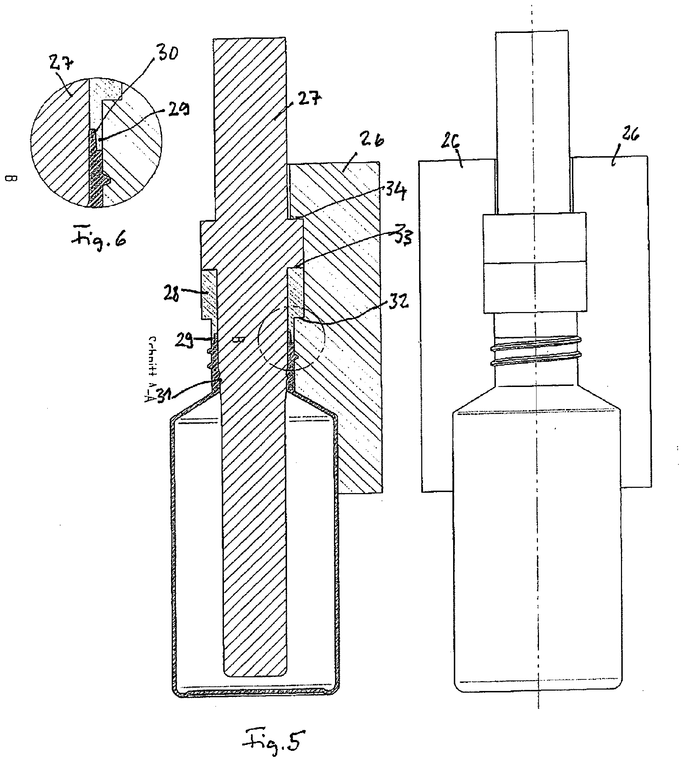

Figur 5 zeigt einen Blasdorn 27, der von einem ringförmigen Blasdornteil 28 umgeben ist, das einen ringförmigen Ansatz 29 enthält, der einen Ringspalt 30 zwischen sich und der Außenseite des Blasdorns 27 begrenzt. In diesem Ringspalt 30 wird der Randbereich der Behälteröffnung 20 ausgebildet, der damit sowohl an der Innenseite als auch an der Außenseite glatte durchgehende Oberflächen hat. Der Blasdorn 27 hat zudem eine kleine ringförmige Ausbuchtung 31, durch die die Ringnut 18 in der Innenwand der Behälteröffnung ausgebildet wird.

Das Blasformteil 28 enthält außerdem zwei radial äußere Ringschultern 32, 33, mit denen es an entsprechenden Ringschultern der beiden Blasformhälften 26 und des Blasdorns 27 anliegt. Eine weitere Ringschulter 34 des Blasdorns liegt im geschlossenen Zustand der Blasformhälften 26 an einer zugehörigen Ringschulter der Blasformhälften in deren geschlossenen Zustand an.

Es wird betont, dass die Erfindung nicht auf die beschriebenen und dargestellten Ausführungsformen beschränkt ist.

## Patentansprüche

1. Verfahren zur Herstellung eines Behälters mit einer Behälteröffnung zur Verwendung in einem Behälterverschluss-System mit dem Behälter und mit einer Schraubkappe, die auf den Behälter aufschraubbar ist, und an die eine kreisringförmige Olive an einer solchen Position angeformt ist, dass sie an dem äußeren ringförmigen Randbereich (24) des Behälters (1) anlegbar ist, welcher Randbereich (24) eine durchgehend glatte Oberfläche ohne Grate hat,
**dadurch gekennzeichnet,**
**dass** der Behälter (1) im Extrusionsblasverfahren oder Spritzblasverfahren derart hergestellt wird, dass an dem äußeren ringförmigen Randbereich (24) des Behälters (1) keine Formtrennung der Blasformhälften stattfindet, indem ein Blasdorn (27) eines Blaswerkzeugs verwendet wird, der von einem ringförmigen Blasdornteil (28) umgeben ist, das einen ringförmigen Ansatz (29) enthält, der einen Ringspalt (30) zwischen sich und der Außenseite des Blasdorns (27) begrenzt, wobei in diesem Ringspalt (30) der Randbereich der Behälteröffnung (20) ausgebildet wird, der damit sowohl an der Innenseite als auch an der Außenseite glatt durchgehende Oberflächen hat, wobei das Blasformteil (28) außerdem zwei radial äußere Ringschultern (32, 33) enthält, mit denen es an entsprechenden Ringschultern der beiden Blasformhälften (26) und des Blasdorns (27) anliegt.

2. Verfahren nach Anspruch 1,
**dadurch gekennzeichnet,**
**dass** die Behälteröffnung (20) durch eine entfernbare Folie (21) versiegelt wird, die mit der Randkante (22) der Behälteröffnung (20) verschweißt oder verklebt wird.

3. Verfahren nach den Ansprüchen 1 oder 2,
**dadurch gekennzeichnet,**
**dass** ein Blockierelement (11) mit einer Aufhängeeinrichtung (15,16) an der Innenwand des Behälterhalses (2) befestigt wird, derart, dass das Blockierelement (11) unterhalb des Behälterhalses (2) angeordnet ist, und dass die Aufhängeeinrichtung (15,16) Durchlassöffnungen (19) für Kapseln, Dragees, Tabletten oder dergleichen aufweist, die jeweils kleiner als der Durchmesser des Behälterhalses (2) sind.

4. Verfahren nach Anspruch 3,
**dadurch gekennzeichnet,**
**dass** der Behälter (1) die Form einer Flasche mit einem Flaschenhals hat, und dass das Blockierelement (11) und die Aufhängeeinrichtung (15,16) einen übereinstimmenden Außendurchmesser haben, der im wesentlichen mit dem Innendurchmesser des Flaschenhalses übereinstimmt.

5. Verfahren nach einem der Ansprüche 3 oder 4,
**dadurch gekennzeichnet,**
**dass** als Blockierelement (11) eine Trockenmittelkammer verwendet wird.

## Claims

1. A method of producing a container with a container opening for use in a container closure system including the container and a screw cap, which may be screwed onto the container and formed on which is a circular annular olive at such a position that it is engageable with the outer annular edge region (24) of the container (1), which edge region (24) has a continuously smooth surface without ridges, **characterised in that** the container (1) is produced in an extrusion blow moulding process or injection blow moulding process such that no parting line of the blow mould halves occurs on the outer annular edge region (24) of the container by using a blowing mandrel (27) of a blowing tool, which is surrounded by an annular blowing mandrel member (28), which includes an annular formation (29), which borders an annular gap (30) between itself and the outer surface of the blowing mandrel (27), wherein the edge region of the container opening (20) is formed in this annular gap (30), which thus has smoothly continuous surfaces both on the inside and on the outside, wherein the blowing mandrel member (28) also includes two radially outer annular shoulders (32, 33) with which it engages corresponding annular shoulders on the two blow mould halves (26) and the blowing mandrel (27).

2. A method as claimed in Claim 1, **characterised in that** the container opening (20) is sealed by a removable film (21), which is secured to the edge (22) of the container opening (20) by welding or adhesive.

3. A method as claimed in Claim 1 or 2, **characterised in that** a blocking element (11) is fastened to the inner wall of the container throat (2) with a suspension device (15, 16) such that the blocking element (11) is arranged below the container throat (2) and that the suspension device (15, 16) has outlet openings (19) for capsules, dragees, tablets or the like, which are in each case smaller than the diameter of the container throat (2).

4. A method as claimed in Claim 3, **characterised in that** the container (1) has the form of a bottle with a bottle throat and that the blocking element (11) and the suspension device (15, 16) have matching diameters, which substantially match the internal diameter of the bottle throat.

5. A method as claimed in one of Claims 3 or 4, **characterised in that** a desiccant chamber is used as the blocking element (11).

## Revendications

1. Procédé servant à fabriquer un contenant avec une ouverture de contenant destiné à être utilisé dans un système de fermeture de contenant avec le contenant et avec un capuchon à visser, qui peut être vissé sur le contenant, et au niveau duquel une olive en forme d'anneau circulaire est formée au niveau d'une position telle qu'elle peut être posée au niveau de la zone de bord (24) extérieure de forme annulaire du contenant (1), laquelle zone de bord (24) a une surface lisse en continu sans bavures,
**caractérisé en ce**
**que** le contenant (1) est fabriqué dans le procédé de soufflage par extrusion ou le procédé de soufflage par injection de telle manière qu'aucune séparation de moule des moitiés de moules de soufflage n'a lieu au niveau de la zone de bord (24) extérieure de forme annulaire du contenant (1), **en ce qu'**un mandrin de soufflage (27) d'un outil de soufflage est utilisé, lequel est entouré par une partie de mandrin de soufflage (28) de forme annulaire, qui contient un bout (29) de forme annulaire, qui délimite une fente annulaire (30) entre lui et le côté extérieur du mandrin de soufflage (27), dans lequel la zone de bord de l'ouverture de contenant (20) est réalisée dans ladite fente annulaire (30), qui a ainsi à la fois au niveau du côté intérieur et au niveau du côté extérieur des surfaces lisses en continu, dans lequel la partie de moule de soufflage (28) contient par ailleurs deux épaulements annulaires (32, 33) radialement extérieurs, avec lesquels elle repose au niveau d'épaulements annulaires correspondants des deux moitiés de moule de soufflage (26) et du mandrin de soufflage (27).

2. Procédé selon la revendication 1,
**caractérisé en ce**
**que** l'ouverture de contenant (20) est scellée par un film (21) retirable, qui est soudé ou collé à l'arête de bord (22) de l'ouverture de contenant (20).

3. Procédé selon les revendications 1 ou 2,
**caractérisé en ce**
**qu'**un élément de blocage (11) est fixé avec un système de suspension (15, 16) au niveau de la paroi intérieure du goulot de contenant (2) de telle manière que l'élément de blocage (11) est disposé sous le goulot de contenant (2), et
**que** le système de suspension (15, 16) présente des ouvertures de passage (19) pour des capsules, dragées, comprimés ou similaires, qui sont respectivement plus petites que le diamètre du goulot de contenant (2).

4. Procédé selon la revendication 3,
**caractérisé en ce**
**que** le contenant (1) a la forme d'une bouteille avec un goulot de bouteille, et
**que** l'élément de blocage (11) et le système de suspension (15, 16) ont un diamètre extérieur qui coïncide, qui coïncide sensiblement au diamètre intérieur du goulot de bouteille.

5. Procédé selon l'une quelconque des revendications 3 ou 4,
**caractérisé en ce**
**qu'**une chambre de siccatif est utilisée en tant qu'élément de blocage (11).
